(19) Europäisches Patentamt
European Patent Office
Office européen des brevets

(11) EP 3 367 800 B1

(12) EUROPEAN PATENT SPECIFICATION

(45) Date of publication and mention of the grant of the patent:
**10.03.2021 Bulletin 2021/10**

(21) Application number: **16785527.9**

(22) Date of filing: **26.10.2016**

(51) Int Cl.:
***A01P 3/00*** *(2006.01)* ***A01N 43/56*** *(2006.01)*
***A01N 43/653*** *(2006.01)*

(86) International application number:
**PCT/EP2016/075784**

(87) International publication number:
**WO 2017/072166 (04.05.2017 Gazette 2017/18)**

# (54) ACTIVE COMPOUND COMBINATIONS COMPRISING A (THIO)CARBOXAMIDE DERIVATIVE AND A FUNGICIDAL COMPOUND

WIRKSTOFFKOMBINATIONEN MIT EINEM (THIO)CARBOXAMIDDERIVAT UND EINER FUNGIZIDEN VERBINDUNG

COMBINAISONS DE COMPOSÉS ACTIFS COMPRENANT UN DÉRIVÉ DE (THIO)CARBOXAMIDE ET UN COMPOSÉ FONGICIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.10.2015 EP 15290277**
**18.03.2016 EP 16290050**

(43) Date of publication of application:
**05.09.2018 Bulletin 2018/36**

(73) Proprietor: **Bayer CropScience Aktiengesellschaft**
**40789 Monheim am Rhein (DE)**

(72) Inventors:
- **COQUERON, Pierre-Yves**
**69009 Lyon (FR)**
- **CRISTAU, Pierre**
**69009 Lyon (FR)**
- **DESBORDES, Philippe**
**69006 Lyon (FR)**
- **DRÖGE, Thomas**
**40764 Langenfeld (DE)**
- **MEISSNER, Ruth**
**51375 Leverkusen (DE)**

(74) Representative: **Guitton, Carole**
**Bayer S.A.S.**
**Patents & Licensing Dpt.**
**14 Impasse Piere Baizet CS 99163**
**69263 Lyon cedex 09 (FR)**

(56) References cited:
**WO-A1-2012/143127** **WO-A1-2014/095994**
**WO-A1-2015/055707** **WO-A1-2015/103262**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 367 800 B1

## Description

The present invention relates to active compound combinations, in particular within a fungicide composition, which comprises (A) a N-cyclopropyl-N-[substituted-benzyl]-3-(difluoromethyl)-5-fluoro-1-methyl-1H-pyrazole-4-carboxamide or thiocarboxamide derivative and at least a further fungicidally active compound (B) consisting of 2-[4-(4-chlorophenoxy)-2-(trifluoromethyl)phenyl]-3-methyl-1-(1H-1,2,4-triazol-1-yl)butan-2-ol. Moreover, the invention relates to a method for curatively or preventively or eradicatively controlling the phytopathogenic fungi of plants or crops, to the use of a combination according to the invention for the treatment of seed, to a method for protecting a seed and not at least to the treated seed.

N-cyclopropyl-N-[substituted-benzyl]-carboxamides or thiocarboxamides, their preparation from commercially available materials and their use as fungicides are disclosed in WO2007/087906, WO2009/016220 and WO2010/130767. N-cyclopropyl-N-[substituted-benzyl]-carboxamides or thiocarboxamides in mixtures with fungicides are disclosed in WO2012/143125 and WO2015/055707. Nevertheless, the synergistic active compound combinations of the present invention are not disclosed nor suggested.

Compound 2-[4-(4-chlorophenoxy)-2-(trifluoromethyl)phenyl]-3-methyl-1-(1H-1,2,4-triazol-1-yl)butan-2-ol (known also under the ISO name ipfentrifluconazole), its fungicidal activity in solo or in mixtures with fungicides, and process to prepare it, are disclosed in WO 2013/007767, WO 2014/108286, WO 2016/005211, WO 2016008740, WO2015197393, WO2014095994 and WO 2014095932.

Nevertheless, the synergistic active compound combinations of the present invention are not disclosed nor suggested.

Since the environmental and economic requirements imposed on modern-day crop protection compositions are continually increasing, with regard, for example, to the spectrum of action, toxicity, selectivity, application rate, formation of residues, and favourable preparation ability, and since, furthermore, there may be problems, for example, with resistances, a constant task is to develop new compositions, in particular fungicidal agents, which in some areas at least help to fulfil the abovementioned requirements.

The present invention provides active compound combinations/compositions which in some aspects at least achieve the stated objective.

It has now been found, surprisingly, that the combinations according to the invention not only bring about the additive enhancement of the spectrum of action with respect to the phytopathogen to be controlled that was in principle to be expected but achieves a synergistic effect which extends the range of action of the component (A) and of the component (B) in two ways. Firstly, the rates of application of the component (A) and of the component (B) are lowered whilst the action remains equally good. Secondly, the combination still achieves a high degree of phytopathogen control even where the two individual compounds have become totally ineffective in such a low application rate range. This allows, on the one hand, a substantial broadening of the spectrum of phytopathogens that can be controlled and, on the other hand, increased safety in use.

In addition to the fungicidal synergistic activity, the active compound combinations according to the invention have further surprising properties which, in a wider sense, may also be called synergistic, such as, for example: broadening of the activity spectrum to other phytopathogens, for example to resistant strains of plant diseases; lower application rates of the active compounds; sufficient control of pests with the aid of the active compound combinations according to the invention even at application rates where the individual compounds show no or virtually no activity; advantageous behaviour during formulation or during use, for example during grinding, sieving, emulsifying, dissolving or dispensing; improved storage stability and light stability; advantageous residue formation; improved toxicological or ecotoxicological behaviour; improved properties of the plant, for example better growth, increased harvest yields, a better developed root system, a larger leaf area, greener leaves, stronger shoots, less seed required, lower phytotoxicity, mobilization of the defence system of the plant, good compatibility with plants. Thus, the use of the active compound combinations or compositions according to the invention contributes considerably to keeping young cereal stands healthy, which increases, for example, the winter survival of the cereal seed treated, and also safeguards quality and yield. Moreover, the active compound combinations according to the invention may contribute to enhanced systemic action. Even if the individual compounds of the combination have no sufficient systemic properties, the active compound combinations according to the invention may still have this property. In a similar manner, the active compound combinations according to the invention may result in higher persistency of the fungicidal action.

Accordingly, the present invention provides a combination comprising:

(A) at least one derivative of formula (I)

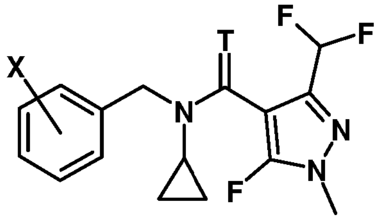

(I)

wherein T represents an oxygen atom and X is 5-chloro-2-isopropyl, or an agrochemically acceptable salt thereof, and (B) at least one further active fungicidal compound B consisting of 2-[4-(4-chlorophenoxy)-2-(trifluoromethyl)phenyl]-3-methyl-1-(1H-1,2,4-triazol-1-yl)butan-2-ol.

In a particular embodiment, the compound A of the formula (I) is N-(5-chloro-2-isopropylbenzyl)-N-cyclopropyl-3-(difluoromethyl)-5-fluoro-1-methyl-1H-pyrazole-4-carboxamide (compound A5).

In another particular embodiment, component (B) is 2-[4-(4-chlorophenoxy)-2-(trifluoromethyl)phenyl]-3-methyl-1-(1H-1,2,4-triazol-1-yl)butan-2-ol (ISO name is ipfentrifluconazole).

2-[4-(4-chlorophenoxy)-2-(trifluoromethyl)phenyl]-3-methyl-1-(1H-1,2,4-triazol-1-yl)butan-2-ol (ISO name is ipfentrifluconazole), is a compound of formula

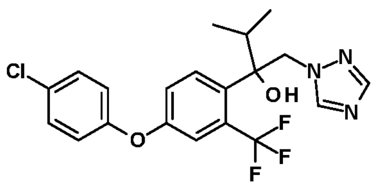

All named mixing partners of the compound combinations of the invention may, if their functional groups enable this, optionally form salts with suitable bases or acids.

If the active compounds in the active compound combinations according to the invention are present in certain weight ratios, the synergistic effect is particularly pronounced. However, the weight ratios of the active compounds in the active compound combinations can be varied within a relatively wide range.

In the combinations according to the invention the compounds (A) and (B) are present in a synergistically effective weight ratio of A:B in a range of 1000:1 to 1:1000, preferably in a weight ratio of 100:1 to 1:100, more preferably in a weight ratio of 50:1 to 1:50, even more preferably in a weight ratio of 20:1 to 1:20. Further ratios of A:B which can be used according to the present invention with increasing preference in the order given are: 95:1 to 1:95, 90:1 to 1:90, 85:1 to 1:85, 80:1 to 1:80, 75:1 to 1:75, 70:1 to 1:70, 65:1 to 1:65, 60:1 to 1:60, 55:1 to 1:55, 45:1 to 1:45, 40:1 to 1:40, 35:1 to 1:35, 30:1 to 1:30, 25:1 to 1:25, 15:1 to 1:15, 10:1 to 1:10, 5:1 to 1:5, 4:1 to 1:4, 3:1 to 1:3, 2:1 to 1:2.

In a particular embodiment, the invention is directed to a mixture comprising a compound A which is N-(5-chloro-2-isopropylbenzyl)-N-cyclopropyl-3-(difluoromethyl)-5-fluoro-1-methyl-1H-pyrazole-4-carboxamide and a compound B which is 2-[4-(4-chlorophenoxy)-2-(trifluoromethyl)phenyl]-3-methyl-1-(1H-1,2,4-triazol-1-yl)butan-2-ol in a weight ratio A:B of 100:1 to 1:100, preferably of 50:1 to 1:50, more preferably of 20:1 to 1:20, even more preferably of 10:1 to 1:10, 5:1 to 1:5, 4:1 to 1:4, 3:1 to 1:3.

In a particular embodiment, the invention is directed to a mixture comprising a compound A which is N-(5-chloro-2-isopropylbenzyl)-N-cyclopropyl-3-(difluoromethyl)-5-fluoro-1-methyl-1H-pyrazole-4-carboxamide and a compound B which is 2-[4-(4-chlorophenoxy)-2-(trifluoromethyl)phenyl]-3-methyl-1-(1H-1,2,4-triazol-1-yl)butan-2-ol in a weight ratio A:B of 1000:1 to 1:1000, preferably of 200:1 to 1:200, more preferably of 100:1 to 1:100, even more preferably of 20:1 to 1:200, 10:1 to 1:100, 1:1 to 1:10.

Where a compound (A) or a compound (B) can be present in tautomeric form, such a compound is understood hereinabove and hereinbelow also to include, where applicable, corresponding tautomeric forms, even when these are not specifically mentioned in each case.

Compounds (A) or compounds (B) having at least one basic centre are capable of forming, for example, acid addition salts, e.g. with strong inorganic acids, such as mineral acids, e.g. perchloric acid, sulfuric acid, nitric acid, nitrous acid, a phosphoric acid or a hydrohalic acid, with strong organic carboxylic acids, such as unsubstituted substituted, e.g. halo-substituted, $C_1$-$C_4$-alkanecarboxylic acids, e.g. acetic acid, saturated or unsaturated dicarboxylic acids, e.g. oxalic, malonic, succinic, maleic, fumaric and phthalic acid, hydroxycarboxylic acids, e.g. ascorbic, lactic, malic, tartaric and citric acid, or benzoic acid, or with organic sulfonic acids, such as unsubstituted or substituted, e.g. halo-substituted, $C_1$-$C_4$-alkane- or arylsulfonic acids, e.g. methane-or p-toluene-sulfonic acid. Compounds (A) or compounds (B) having

at least one acid group are capable of forming, for example, salts with bases, e.g. metal salts, such as alkali metal or alkaline earth metal salts, e.g. sodium, potassium or magnesium salts, or salts with ammonia or an organic amine, such as morpholine, piperidine, pyrrolidine, a mono-, di- or tri-lower alkylamine, e.g. ethyl-, diethyl-, triethyl- or dimethylpropylamine, or a mono-, di- or tri-hydroxy-lower alkylamine, e.g. mono-, di- or tri-ethanolamine. In addition, corresponding internal salts may optionally be formed. In the context of the invention, preference is given to agrochemically advantageous salts. In view of the close relationship between the compounds (A) or the compounds (B) in free form and in the form of their salts, hereinabove and herein below any reference to the free compounds (A) or free compounds (B) or to their salts should be understood as including also the corresponding salts or the free compounds (A) or free compounds (B), respectively, where appropriate and expedient. The equivalent also applies to tautomers of compounds (A) or compounds (B) and to their salts.

According to the invention the expression "combination" stands for the various combinations of compounds (A) and (B), for example in a single "ready-mix" form, in a combined spray mixture composed from separate formulations of the single active compounds, such as a "tank-mix", and in a combined use of the single active ingredients when applied in a sequential manner, i.e. one after the other with a reasonably short period, such as a few hours or days. Preferably the order of applying the compounds (A) and (B) is not essential for working the present invention.

In an embodiment of the invention, the expression " a compound combination" means "composition", wherein the application of compounds (A) and (B) can be done simultaneously or consecutively, provided that compounds (A) and (B) are at one time present together, in order to exhibit a combined or synergistic effect.

The present invention furthermore relates to compositions for combating/controlling undesirable microorganisms comprising the active compound combinations according to the invention. Preferably, the compositions are fungicidal compositions comprising agriculturally suitable auxiliaries, solvents, carriers, surfactants or extenders.

Furthermore the invention relates to a method of combating undesirable microorganisms, characterized in that the active compound combinations according to the invention are applied to the phytopathogenic fungi and/or their habitat.

According to the invention, carrier is to be understood as meaning a natural or synthetic, organic or inorganic substance which is mixed or combined with the active compounds for better applicability, in particular for application to plants or plant parts or seeds. The carrier, which may be solid or liquid, is generally inert and should be suitable for use in agriculture.

Suitable solid or liquid carriers are: for example ammonium salts and natural ground minerals, such as kaolins, clays, talc, chalk, quartz, attapulgite, montmorillonite or diatomaceous earth, and ground synthetic minerals, such as finely divided silica, alumina and natural or synthetic silicates, resins, waxes, solid fertilizers, water, alcohols, especially butanol, organic solvents, mineral oils and vegetable oils, and also derivatives thereof. It is also possible to use mixtures of such carriers. Solid carriers suitable for granules are: for example crushed and fractionated natural minerals, such as calcite, marble, pumice, sepiolite, dolomite, and also synthetic granules of inorganic and organic meals and also granules of organic material, such as sawdust, coconut shells, maize cobs and tobacco stalks.

Suitable liquefied gaseous extenders or carriers are liquids which are gaseous at ambient temperature and under atmospheric pressure, for example aerosol propellants, such as butane, propane, nitrogen and carbon dioxide.

Tackifiers, such as carboxymethylcellulose and natural and synthetic polymers in the form of powders, granules and latices, such as gum arabic, polyvinyl alcohol, polyvinyl acetate, or else natural phospholipids, such as cephalins and lecithins and synthetic phospholipids can be used in the formulations. Other possible additives are mineral and vegetable oils and waxes, optionally modified.

If the extender used is water, it is also possible for example, to use organic solvents as auxiliary solvents. Suitable liquid solvents are essentially: aromatic compounds, such as xylene, toluene or alkylnaphthalenes, chlorinated aromatic compounds or chlorinated aliphatic hydrocarbons, such as chlorobenzenes, chloroethylenes or methylene chloride, aliphatic hydrocarbons, such as cyclohexane or paraffins, for example mineral oil fractions, mineral and vegetable oils, alcohols, such as butanol or glycol, and also ethers and esters thereof, ketones, such as acetone, methyl ethyl ketone, methyl isobutyl ketone or cyclohexanone, strongly polar solvents, such as dimethylformamide and dimethyl sulfoxide, and also water.

The compositions according to the invention may comprise additional further components, such as, for example, surfactants. Suitable surfactants are emulsifiers, dispersants or wetting agents having ionic or nonionic properties, or mixtures of these surfactants. Examples of these are salts of polyacrylic acid, salts of lignosulfonic acid, salts of phenolsulfonic acid or naphthalenesulfonic acid, polycondensates of ethylene oxide with fatty alcohols or with fatty acids or with fatty amines, substituted phenols (preferably alkylphenols or arylphenols), salts of sulfosuccinic esters, taurine derivatives (preferably alkyl taurates), phosphoric esters of polyethoxylated alcohols or phenols, fatty esters of polyols, and derivatives of the compounds containing sulfates, sulfonates and phosphates. The presence of a surfactant is required if one of the active compounds and/or one of the inert carriers is insoluble in water and when the application takes place in water. The proportion of surfactants is between 5 and 40 per cent by weight of the composition according to the invention.

It is possible to use colorants such as inorganic pigments, for example iron oxide, titanium oxide, Prussian blue,

and organic dyes, such as alizarin dyes, azo dyes and metal phthalocyanine dyes, and trace nutrients, such as salts of iron, manganese, boron, copper, cobalt, molybdenum and zinc.

If appropriate, other additional components may also be present, for example protective colloids, binders, adhesives, thickeners, thixotropic substances, penetrants, stabilizers, sequestering agents, complex formers. In general, the active compounds can be combined with any solid or liquid additive customarily used for formulation purposes.

In general, the compositions according to the invention comprise between 0.05 and 99 per cent by weight, 0.01 and 98 per cent by weight, preferable between 0.1 and 95 per cent by weight, particularly preferred between 0.5 and 90 per cent by weight of the active compound combination according to the invention, very particularly preferable between 10 and 70 per cent by weight.

The active compound combinations or compositions according to the invention can be used as such or, depending on their respective physical and/or chemical properties, in the form of their formulations or the use forms prepared therefrom, such as aerosols, capsule suspensions, cold-fogging concentrates, warm-fogging concentrates, encapsulated granules, fine granules, flowable concentrates for the treatment of seed, ready-to-use solutions, dustable powders, emulsifiable concentrates, oil-in-water emulsions, water-in-oil emulsions, macrogranules, microgranules, oil-dispersible powders, oil-miscible flowable concentrates, oil-miscible liquids, foams, pastes, pesticide-coated seed, suspension concentrates, suspoemulsion concentrates, soluble concentrates, suspensions, wettable powders, soluble powders, dusts and granules, water-soluble granules or tablets, water-soluble powders for the treatment of seed, wettable powders, natural products and synthetic substances impregnated with active compound, and also microencapsulations in polymeric substances and in coating materials for seed, and also ULV cold-fogging and warm-fogging formulations.

The formulations mentioned can be prepared in a manner known per se, for example by mixing the active compounds or the active compound combinations with at least one additive. Suitable additives are all customary formulation auxiliaries, such as, for example, organic solvents, extenders, solvents or diluents, solid carriers and fillers, surfactants (such as adjuvants, emulsifiers, dispersants, protective colloids, wetting agents and tackifiers), dispersants and/or binders or fixatives, preservatives, dyes and pigments, defoamers, inorganic and organic thickeners, water repellents, if appropriate siccatives and UV stabilizers, gibberellins and also water and further processing auxiliaries. Depending on the formulation type to be prepared in each case, further processing steps such as, for example, wet grinding, dry grinding or granulation may be required.

The compositions according to the invention do not only comprise ready-to-use compositions which can be applied with suitable apparatus to the plant or the seed, but also commercial concentrates which have to be diluted with water prior to use.

The active compound combinations according to the invention can be present in (commercial) formulations and in the use forms prepared from these formulations as a mixture with other (known) active compounds, such as insecticides, attractants, sterilants, bactericides, acaricides, nematicides, fungicides, growth regulators, herbicides, fertilizers, safeners and Semiochemicals.

The treatment according to the invention of the plants and plant parts with the active compounds or compositions is carried out directly or by action on their surroundings, habitat or storage space using customary treatment methods, for example by dipping, spraying, atomizing, irrigating, evaporating, dusting, fogging, broadcasting, foaming, painting, spreading-on, watering (drenching), drip irrigating and, in the case of propagation material, in particular in the case of seeds, furthermore as a powder for dry seed treatment, a solution for seed treatment, a water-soluble powder for slurry treatment, by incrusting, by coating with one or more layers, etc. It is furthermore possible to apply the active compounds by the ultra-low volume method, or to inject the active compound preparation or the active compound itself into the soil.

The invention furthermore comprises a method for treating seed. The invention furthermore relates to seed treated according to one of the methods described in the preceding paragraph.

The active compounds or compositions according to the invention are especially suitable for treating seed. A large part of the damage to crop plants caused by harmful organisms is triggered by an infection of the seed during storage or after sowing as well as during and after germination of the plant. This phase is particularly critical since the roots and shoots of the growing plant are particularly sensitive, and even small damage may result in the death of the plant. Accordingly, there is great interest in protecting the seed and the germinating plant by using appropriate compositions.

The control of phytopathogenic fungi by treating the seed of plants has been known for a long time and is the subject of continuous improvements. However, the treatment of seed entails a series of problems which cannot always be solved in a satisfactory manner. Thus, it is desirable to develop methods for protecting the seed and the germinating plant which dispense with the additional application of crop protection agents after sowing or after the emergence of the plants or which at least considerably reduce additional application. It is furthermore desirable to optimize the amount of active compound employed in such a way as to provide maximum protection for the seed and the germinating plant from attack by phytopathogenic fungi, but without damaging the plant itself by the active compound employed. In particular, methods for the treatment of seed should also take into consideration the intrinsic fungicidal properties of transgenic plants in order to achieve optimum protection of the seed and the germinating plant with a minimum of crop protection

agents being employed.

Accordingly, the present invention also relates in particular to a method for protecting seed and germinating plants against attack by phytopathogenic fungi by treating the seed with a composition according to the invention. The invention also relates to the use of the compositions according to the invention for treating seed for protecting the seed and the germinating plant against phytopathogenic fungi. Furthermore, the invention relates to seed treated with a composition according to the invention for protection against phytopathogenic fungi.

The control of phytopathogenic fungi which damage plants post-emergence is carried out primarily by treating the soil and the above-ground parts of plants with crop protection compositions. Owing to the concerns regarding a possible impact of the crop protection composition on the environment and the health of humans and animals, there are efforts to reduce the amount of active compounds applied.

One of the advantages of the present invention is that, because of the particular systemic properties of the compositions according to the invention, treatment of the seed with these compositions not only protects the seed itself, but also the resulting plants after emergence, from phytopathogenic fungi. In this manner, the immediate treatment of the crop at the time of sowing or shortly thereafter can be dispensed with.

It is also considered to be advantageous that the mixtures according to the invention can be used in particular also for transgenic seed where the plant growing from this seed is capable of expressing a protein which acts against pests. By treating such seed with the active compound combinations or compositions according to the invention, even by the expression of the, for example, insecticidal protein, certain pests may be controlled. Surprisingly, a further synergistic effect may be observed here, which additionally increases the effectiveness of the protection against attack by pests.

The compositions according to the invention are suitable for protecting seed of any plant variety employed in agriculture, in the greenhouse, in forests or in horticulture or viticulture. In particular, this takes the form of seed of cereals (such as wheat, barley, rye, triticale, millet, oats), maize (corn), cotton, soya bean, rice, potatoes, sunflowers, beans, coffee, beets (e.g. sugar beets and fodder beets), peanuts, oilseed rape, poppies, olives, coconuts, cacao, sugar cane, tobacco, vegetables (such as tomatoes, cucumbers, onions and lettuce), lawn and ornamental plants (also see below). The treatment of seeds of cereals (such as wheat, barley, rye, triticale, and oats), maize (corn) and rice is of particular importance.

According to the invention all plants and plant parts can be treated. By plants is meant all plants and plant populations such as desirable and undesirable wild plants, cultivars and plant varieties (whether or not protectable by plant variety or plant breeder's rights). Cultivars and plant varieties can be plants obtained by conventional propagation and breeding methods which can be assisted or supplemented by one or more biotechnological methods such as by use of double haploids, protoplast fusion, random and directed mutagenesis, molecular or genetic markers or by bioengineering and genetic engineering methods. By plant parts is meant all above ground and below ground parts and organs of plants such as shoot, leaf, blossom and root, whereby for example leaves, needles, stems, branches, blossoms, fruiting bodies, fruits and seed as well as roots, corms and rhizomes are listed. Crops and vegetative and generative propagating material, for example cuttings, corms, rhizomes, runners and seeds also belong to plant parts.

Among the plants that can be protected by the method according to the invention, mention may be made of major field crops like corn, soybean, cotton, *Brassica* oilseeds such as *Brassica napus* (e.g. canola), *Brassica rapa, B. juncea* (e.g. mustard) and *Brassica carinata,* rice, wheat, sugarbeet, sugarcane, oats, rye, barley, millet, triticale, flax, vine and various fruits and vegetables of various botanical taxa such as *Rosaceae sp.* (for instance pip fruit such as apples and pears, but also stone fruit such as apricots, cherries, almonds and peaches, berry fruits such as strawberries), *Ribesioidae sp., Juglandaceae sp., Betulaceae sp., Anacardiaceae sp., Fagaceae sp., Moraceae sp., Oleaceae sp., Actinidaceae sp., Lauraceae sp., Musaceae sp.* (for instance banana trees and plantings), *Rubiaceae sp.* (for instance coffee), *Theaceae sp., Sterculiceae sp., Rutaceae sp.* (for instance lemons, oranges and grapefruit) ; *Solanaceae sp.* (for instance tomatoes, potatoes, peppers, eggplant), *Liliace*ae *sp.,* Compositiae sp. (for instance lettuce, artichoke and chicory - including root chicory, endive or common chicory), *Umbelliferae sp.* (for instance carrot, parsley, celery and celeriac), *Cucurbitaceae sp.* (for instance cucumber - including pickling cucumber, squash, watermelon, gourds and melons), *Alliaceae* sp. (for instance onions and leek), *Cruciferae sp.* (for instance white cabbage, red cabbage, broccoli, cauliflower, brussel sprouts, pak choi, kohlrabi, radish, horseradish, cress, Chinese cabbage), *Leguminosae sp.* (for instance peanuts, peas and beans beans - such as climbing beans and broad beans), *Chenopodiaceae sp.* (for instance mangold, spinach beet, spinach, beetroots), *Malvaceae* (for instance okra), *Asparagaceae* (for instance asparagus); *Gramineae sp.* (for example maize, lawn, cereals such as wheat, rye, rice, barley, oats, millet and triticale), *Asteraceae sp.* (for example sunflowers), *Brassicaceae sp.* (for example white cabbage, red cabbage, broccoli, cauliflowers, Brussels sprouts, pak choi, kohlrabi, garden radish, and also oilseed rape, mustard, horseradish and cress), *Fabacae sp.* (for example beans, peas, peanuts), *Papilionaceae sp.* (for example soya beans), horticultural and forest crops; ornamental plants; as well as genetically modified homologues of these crops.

Wild plant species and plant cultivars, or those obtained by conventional biological breeding methods, such as crossing or protoplast fusion, and parts thereof, can be treated by the above disclosed methods. Transgenic plants and

plant cultivars obtained by genetic engineering methods, if appropriate in combination with conventional methods (Genetically Modified Organisms), and parts thereof can be treated by the above disclosed methods. Preferably, plants of the plant cultivars which are commercially available or are in use are treated in accordance with the invention. Plant cultivars are understood to mean plants which have new properties ("traits") and have been obtained by conventional breeding, by mutagenesis or by recombinant DNA techniques. They can be cultivars, varieties, bio- or genotypes.

The disclosed methods can be used in the treatment of genetically modified organisms (GMOs), e.g. plants or seeds. Genetically modified plants (or transgenic plants) are plants of which a heterologous gene has been stably integrated into genome. The expression "heterologous gene" essentially means a gene which is provided or assembled outside the plant and when introduced in the nuclear, chloroplastic or mitochondrial genome gives the transformed plant new or improved agronomic or other properties by expressing a protein or polypeptide of interest or by downregulating or silencing other gene(s) which are present in the plant (using for example, antisense technology, cosuppression technology, RNA interference - RNAi - technology or microRNA - miRNA - technology). A heterologous gene that is located in the genome is also called a transgene. A transgene that is defined by its particular location in the plant genome is called a transformation or transgenic event.

Plants and plant cultivars which can be treated by the above disclosed methods include all plants which have genetic material which impart particularly advantageous, useful traits to these plants (whether obtained by breeding and/or biotechnological means).

Plants and plant cultivars which can be treated by the above disclosed methods include plants and plant cultivars which are resistant against one or more biotic stresses, i.e. said plants show a better defense against animal and microbial pests, such as against nematodes, insects, mites, phytopathogenic fungi, bacteria, viruses and/or viroids.

Plants and plant cultivars which can be treated by the above disclosed methods include those plants which are resistant to one or more abiotic stresses. Abiotic stress conditions may include, for example, drought, cold temperature exposure, heat exposure, osmotic stress, flooding, increased soil salinity, increased mineral exposure, ozone exposure, high light exposure, limited availability of nitrogen nutrients, limited availability of phosphorus nutrients, shade avoidance.

Plants and plant cultivars which can be treated by the above disclosed methods include those plants characterized by enhanced yield characteristics. Increased yield in said plants can be the result of, for example, improved plant physiology, growth and development, such as water use efficiency, water retention efficiency, improved nitrogen use, enhanced carbon assimilation, improved photosynthesis, increased germination efficiency and accelerated maturation. Yield can furthermore be affected by improved plant architecture (under stress and non-stress conditions), including but not limited to, early flowering, flowering control for hybrid seed production, seedling vigor, plant size, internode number and distance, root growth, seed size, fruit size, pod size, pod or ear number, seed number per pod or ear, seed mass, enhanced seed filling, reduced seed dispersal, reduced pod dehiscence and lodging resistance. Further yield traits include seed composition, such as carbohydrate content and composition for example cotton or starch, protein content, oil content and composition, nutritional value, reduction in anti-nutritional compounds, improved processability and better storage stability.

Plants and plant cultivars which can be treated by the above disclosed methods include plants and plant cultivars which are hybrid plants that already express the characteristic of heterosis or hybrid vigor which results in generally higher yield, vigor, health and resistance towards biotic and abiotic stresses).

Plants and plant cultivars (obtained by plant biotechnology methods such as genetic engineering) which can be treated by the above disclosed methods include plants and plant cultivars which are herbicide-tolerant plants, i.e. plants made tolerant to one or more given herbicides. Such plants can be obtained either by genetic transformation, or by selection of plants containing a mutation imparting such herbicide tolerance.

Plants and plant cultivars (obtained by plant biotechnology methods such as genetic engineering) which can be treated by the above disclosed methods include plants and plant cultivars which are insect-resistant transgenic plants, i.e. plants made resistant to attack by certain target insects. Such plants can be obtained by genetic transformation, or by selection of plants containing a mutation imparting such insect resistance.

Plants and plant cultivars (obtained by plant biotechnology methods such as genetic engineering) which can be treated by the above disclosed methods include plants and plant cultivars which are tolerant to abiotic stresses. Such plants can be obtained by genetic transformation, or by selection of plants containing a mutation imparting such stress resistance.

Plants and plant cultivars (obtained by plant biotechnology methods such as genetic engineering) which can be treated by the above disclosed methods include plants and plant cultivars which show altered quantity, quality and/or storage-stability of the harvested product and/or altered properties of specific ingredients of the harvested product.

Plants and plant cultivars (obtained by plant biotechnology methods such as genetic engineering) which can be treated by the above disclosed methods include plants and plant cultivars, such as cotton plants, with altered fiber characteristics. Such plants can be obtained by genetic transformation, or by selection of plants contain a mutation imparting such altered fiber characteristics.

Plants and plant cultivars (obtained by plant biotechnology methods such as genetic engineering) which can

be treated by the above disclosed methods include plants and plant cultivars, such as oilseed rape or related Brassica plants, with altered oil profile characteristics. Such plants can be obtained by genetic transformation, or by selection of plants contain a mutation imparting such altered oil profile characteristics.

Plants and plant cultivars (obtained by plant biotechnology methods such as genetic engineering) which can be treated by the above disclosed methods include plants and plant cultivars, such as oilseed rape or related Brassica plants, with altered seed shattering characteristics. Such plants can be obtained by genetic transformation, or by selection of plants contain a mutation imparting such altered seed shattering characteristics and include plants such as oilseed rape plants with delayed or reduced seed shattering.

Plants and plant cultivars (obtained by plant biotechnology methods such as genetic engineering) which can be treated by the above disclosed methods include plants and plant cultivars, such as Tobacco plants, with altered post-translational protein modification patterns.

In the context of the present invention, the active compound combinations or compositions according to the invention are applied on their own or in a suitable formulation to the seed. Preferably, the seed is treated in a state in which it is sufficiently stable so that the treatment does not cause any damage. In general, treatment of the seed may take place at any point in time between harvesting and sowing. Usually, the seed used is separated from the plant and freed from cobs, shells, stalks, coats, hairs or the flesh of the fruits. Thus, it is possible to use, for example, seed which has been harvested, cleaned and dried to a moisture content of less than 15 % by weight. Alternatively, it is also possible to use seed which, after drying, has been treated, for example, with water and then dried again.

When treating the seed, care must generally be taken that the amount of the composition according to the invention applied to the seed and/or the amount of further additives is chosen in such a way that the germination of the seed is not adversely affected, or that the resulting plant is not damaged. This must be borne in mind in particular in the case of active compounds which may have phytotoxic effects at certain application rates.

The compositions according to the invention can be applied directly, that is to say without comprising further components and without having been diluted. In general, it is preferable to apply the compositions to the seed in the form of a suitable formulation. Suitable formulations and methods for the treatment of seed are known to the person skilled in the art and are described, for example, in the following documents: US 4,272,417 A, US 4,245,432 A, US 4,808,430 A, US 5,876,739 A, US 2003/0176428 A1, WO 2002/080675 A1, WO 2002/028186 A2.

The active compound combinations which can be used according to the invention can be converted into customary seed dressing formulations, such as solutions, emulsions, suspensions, powders, foams, slurries or other coating materials for seed, and also ULV formulations.

These formulations are prepared in a known manner by mixing the active compounds or active compound combinations with customary additives, such as, for example, customary extenders and also solvents or diluents, colorants, wetting agents, dispersants, emulsifiers, defoamers, preservatives, secondary thickeners, adhesives, gibberellins and water as well.

Suitable colorants that may be present in the seed dressing formulations which can be used according to the invention include all colorants customary for such purposes. Use may be made both of pigments, of sparing solubility in water, and of dyes, which are soluble in water. Examples that may be mentioned include the colorants known under the designations Rhodamine B, C.I. Pigment Red 112, and C.I. Solvent Red 1.

Suitable wetting agents that may be present in the seed dressing formulations which can be used according to the invention include all substances which promote wetting and are customary in the formulation of active agrochemical substances. With preference it is possible to use alkylnaphthalene-sulfonates, such as diisopropyl- or diisobutylnaphthalene-sulfonates.

Suitable dispersants and/or emulsifiers that may be present in the seed dressing formulations which can be used according to the invention include all nonionic, anionic, and cationic dispersants which are customary in the formulation of active agrochemical substances. With preference, it is possible to use nonionic or anionic dispersants or mixtures of nonionic or anionic dispersants. Particularly suitable nonionic dispersants are ethylene oxide-propylene oxide block polymers, alkylphenol polyglycol ethers, and tristyrylphenol polyglycol ethers, and their phosphated or sulfated derivatives. Particularly suitable anionic dispersants are lignosulfonates, polyacrylic salts, and arylsulfonate-formaldehyde condensates.

Defoamers that may be present in the seed dressing formulations to be used according to the invention include all foam-inhibiting compounds which are customary in the formulation of agrochemically active compounds. Preference is given to using silicone defoamers, magnesium stearate, silicone emulsions, long-chain alcohols, fatty acids and their salts and also organofluorine compounds and mixtures thereof. Preservatives that may be present in the seed dressing formulations to be used according to the invention include all compounds which can be used for such purposes in agrochemical compositions. By way of example, mention may be made of dichlorophen and benzyl alcohol hemiformal.

Secondary thickeners that may be present in the seed dressing formulations to be used according to the invention include all compounds which can be used for such purposes in agrochemical compositions. Preference is given to cellulose derivatives, acrylic acid derivatives, polysaccharides, such as xanthan gum or Veegum, modified clays, phyllosilicates,

such as attapulgite and bentonite, and also finely divided silicic acids.
Suitable adhesives that may be present in the seed dressing formulations to be used according to the invention include all customary binders which can be used in seed dressings. Polyvinylpyrrolidone, polyvinyl acetate, polyvinyl alcohol and tylose may be mentioned as being preferred.
Suitable gibberellins that may be present in the seed dressing formulations to be used according to the invention are preferably the gibberellins A1, A3 (= gibberellic acid), A4 and A7; particular preference is given to using gibberellic acid. The gibberellins are known (cf. R. Wegler "Chemie der Pflanzenschutz- and Schäd-lingsbekampfungsmittel" [Chemistry of Crop Protection Agents and Pesticides], Vol. 2, Springer Verlag, 1970, pp. 401-412).

The seed dressing formulations which can be used according to the invention may be used directly or after dilution with water beforehand to treat seed of any of a very wide variety of types. The seed dressing formulations which can be used according to the invention or their dilute preparations may also be used to dress seed of transgenic plants. In this context, synergistic effects may also arise in interaction with the substances formed by expression.

Suitable mixing equipment for treating seed with the seed dressing formulations which can be used according to the invention or the preparations prepared from them by adding water includes all mixing equipment which can commonly be used for dressing. The specific procedure adopted when dressing comprises introducing the seed into a mixer, adding the particular desired amount of seed dressing formulation, either as it is or following dilution with water beforehand, and carrying out mixing until the formulation is uniformly distributed on the seed. Optionally, a drying operation follows.

The active compounds or compositions according to the invention have strong microbicidal activity and can be used for controlling unwanted microorganisms, such as fungi and bacteria, in crop protection and material protection.

In crop protection, fungicides can be used for controlling Plasmodiophoromycetes, Oomycetes, Chytridiomycetes, Zygomycetes, Ascomycetes, Basidiomycetes and Deuteromycetes.
In crop protection, bactericides can be used for controlling Pseudomonadaceae, Rhizobiaceae, Enterobacteriaceae, Corynebacteriaceae and Streptomycetaceae.

The fungicidal compositions according to the invention can be used for the curative or protective control of phytopathogenic fungi. Accordingly, the invention also relates to curative and protective methods for controlling phytopathogenic fungi using the active compound combinations or compositions according to the invention, which are applied to the seed, the plant or plant parts, the fruit or the soil in which the plants grow. Preference is given to application onto the plant or the plant parts, the fruits or the soil in which the plants grow.

The compositions according to the invention for combating phytopathogenic fungi in crop protection comprise an active, but non-phytotoxic amount of the compounds according to the invention. "Active, but non-phytotoxic amount" shall mean an amount of the composition according to the invention which is sufficient to control or to completely kill the plant disease caused by fungi, which amount at the same time does not exhibit noteworthy symptoms of phytotoxicity. These application rates generally may be varied in a broader range, which rate depends on several factors, e.g. the phytopathogenic fungi, the plant or crop, the climatic conditions and the ingredients of the composition according to the invention.

The fact that the active compounds, at the concentrations required for the controlling of plant diseases, are well tolerated by plants permits the treatment of aerial plant parts, of vegetative propagation material and seed, and of the soil.

According to the invention, it is possible to treat all plants and parts of plants. Plants are to be understood here as meaning all plants and plant populations, such as wanted and unwanted wild plants or crop plants (including naturally occurring crop plants). Crop plants can be plants which can be obtained by conventional breeding and optimization methods or by biotechnological and genetic engineering methods or combinations of these methods, including the transgenic plants and including plant cultivars which can or cannot be protected by plant variety protection rights. Parts of plants are to be understood as meaning all above-ground and below-ground parts and organs of the plants, such as shoot, leaf, flower and root, examples which may be mentioned being leaves, needles, stems, trunks, flowers, fruit bodies, fruits and seeds and also roots, tubers and rhizomes. Plant parts also include harvested material and vegetative and generative propagation material, for example seedlings, tubers, rhizomes, cuttings and seeds. Preference is given to the treatment of the plants and the above-ground and below-ground parts and organs of the plants, such as shoot, leaf, flower and root, examples which may be mentioned being leaves, needles, stems, trunks, flowers, and fruits.

The active compounds of the invention, in combination with good plant tolerance and favourable toxicity to warm-blooded animals and being tolerated well by the environment, are suitable for protecting plants and plant organs, for increasing the harvest yields, for improving the quality of the harvested material. They may be preferably employed as crop protection agents. They are active against normally sensitive and resistant species and against all or some stages of development.

As already mentioned above, it is possible to treat all plants and their parts according to the invention. In a preferred embodiment, wild plant species and plant cultivars, or those obtained by conventional biological breeding methods, such as crossing or protoplast fusion, and parts thereof, are treated. In a further preferred embodiment,

transgenic plants and plant cultivars obtained by genetic engineering methods, if appropriate in combination with conventional methods (genetically modified organisms), and parts thereof are treated. The terms "parts", "parts of plants" and "plant parts" have been explained above. Particularly preferably, plants of the plant cultivars which are in each case commercially available or in use are treated according to the invention. Plant cultivars are to be understood as meaning plants having novel properties ("traits") which have been obtained by conventional breeding, by mutagenesis or by recombinant DNA techniques. These can be cultivars, bio- or genotypes.

In material protection the substances of the invention may be used for the protection of technical materials against infestation and destruction by undesirable fungi and/or microorganisms.

Technical materials are understood to be in the present context non-living materials that have been prepared for use in engineering. For example, technical materials that are to be protected against micro-biological change or destruction by the active materials of the invention can be adhesives, glues, paper and cardboard, textiles, carpets, leather, wood, paint and plastic articles, cooling lubricants and other materials that can be infested or destroyed by micro-organisms. Within the context of materials to be protected are also parts of production plants and buildings, for example cooling circuits, cooling and heating systems, air conditioning and ventilation systems, which can be adversely affected by the propagation of fungi and/or microorganisms. Within the context of the present invention, preferably mentioned as technical materials are adhesives, glues, paper and cardboard, leather, wood, paints, cooling lubricants and heat exchanger liquids, particularly preferred is wood. The combinations according to the invention can prevent disadvantageous effects like decaying, dis- and decoloring, or molding. The active compound combinations and compositions according to the invention can likewise be employed for protecting against colonization of objects, in particular ship hulls, sieves, nets, buildings, quays and signalling installations, which are in contact with sea water or brackish water.

The method of treatment according to the invention can also be used in the field of protecting storage goods against attack of fungi and microorganisms. According to the present invention, the term "storage goods" is understood to denote natural substances of vegetable or animal origin and their processed forms, which have been taken from the natural life cycle and for which long-term protection is desired. Storage goods of vegetable origin, such as plants or parts thereof, for example stalks, leafs, tubers, seeds, fruits or grains, can be protected in the freshly harvested state or in processed form, such as pre-dried, moistened, comminuted, ground, pressed or roasted. Also falling under the definition of storage goods is timber, whether in the form of crude timber, such as construction timber, electricity pylons and barriers, or in the form of finished articles, such as furniture or objects made from wood. Storage goods of animal origin are hides, leather, furs, hairs and the like. The combinations according the present invention can prevent disadvantageous effects such as decay, discoloration or mold. Preferably "storage goods" is understood to denote natural substances of vegetable origin and their processed forms, more preferably fruits and their processed forms, such as pomes, stone fruits, soft fruits and citrus fruits and their processed forms.

Some pathogens of fungal diseases which can be treated according to the invention may be mentioned by way of example, but not by way of limitation:

Diseases caused by powdery mildew pathogens, such as, for example, Blumeria species, such as, for example, Blumeria graminis; Podosphaera species, such as, for example, Podosphaera leucotricha; Sphaerotheca species, such as, for example, Sphaerotheca fuliginea; Uncinula species, such as, for example, Uncinula necator;

Diseases caused by rust disease pathogens, such as, for example, Gymnosporangium species, such as, for example, Gymnosporangium sabinae; Hemileia species, such as, for example, Hemileia vastatrix; Phakopsora species, such as, for example, Phakopsora pachyrhizi and Phakopsora meibomiae; Puccinia species, such as, for example, Puccinia recondita or Puccinia triticina; Uromyces species, such as, for example, Uromyces appendiculatus;

Diseases caused by pathogens from the group of the Oomycetes, such as, for example, Bremia species, such as, for example, Bremia lactucae; Peronospora species, such as, for example, Peronospora pisi or P. brassicae; Phytophthora species, such as, for example Phytophthora infestans; Plasmopara species, such as, for example, Plasmopara viticola; Pseudoperonospora species, such as, for example, Pseudoperonospora humuli or Pseudoperonospora cubensis; Pythium species, such as, for example, Pythium ultimum;

Leaf blotch diseases and leaf wilt diseases caused, for example, by Alternaria species, such as, for example, Alternaria solani; Cercospora species, such as, for example, Cercospora beticola; Cladiosporium species, such as, for example, Cladiosporium cucumerinum; Cochliobolus species, such as, for example, Cochliobolus sativus (conidia form: Drechslera, Syn: Helminthosporium); Colletotrichum species, such as, for example, Colletotrichum lindemuthanium; Cycloconium species, such as, for example, Cycloconium oleaginum; Diaporthe species, such as, for example, Diaporthe citri; Elsinoe species, such as, for example, Elsinoe fawcettii; Gloeosporium species, such as, for example, Gloeosporium laeticolor; Glomerella species, such as, for example, Glomerella cingulata; Guignardia species, such as, for example, Guignardia bidwelli; Leptosphaeria species, such as, for example, Leptosphaeria maculans; Magnaporthe species, such as, for example, Magnaporthe grisea; Microdochium species, such as, for example, Microdochium nivale; Mycosphaerella species, such as, for example, Mycosphaerella graminicola and M. fijiensis; Phaeosphaeria species, such as, for example, Phaeosphaeria nodorum; Pyrenophora species, such as,

for example, Pyrenophora teres; Ramularia species, such as, for example, Ramularia collo-cygni; Rhynchosporium species, such as, for example, Rhynchosporium secalis; Septoria species, such as, for example, Septoria apii; Typhula species, such as, for example, Typhula incarnata; Venturia species, such as, for example, Venturia inaequalis;

Root and stem diseases caused, for example, by Corticium species, such as, for example, Corticium graminearum; Fusarium species, such as, for example, Fusarium oxysporum; Gaeumannomyces species, such as, for example, Gaeumannomyces graminis; Rhizoctonia species, such as, for example Rhizoctonia solani; Tapesia species, such as, for example, Tapesia acuformis; Thielaviopsis species, such as, for example, Thielaviopsis basicola;

Ear and panicle diseases (including maize cobs) caused, for example, by Alternaria species, such as, for example, Alternaria spp.; Aspergillus species, such as, for example, Aspergillus flavus; Cladosporium species, such as, for example, Cladosporium cladosporioides; Claviceps species, such as, for example, Claviceps purpurea; Fusarium species, such as, for example, Fusarium culmorum; Gibberella species, such as, for example, Gibberella zeae; Monographella species, such as, for example, Monographella nivalis; Septoria species, such as for example, Septoria nodorum;

Diseases caused by smut fungi, such as, for example, Sphacelotheca species, such as, for example, Sphacelotheca reiliana; Tilletia species, such as, for example, Tilletia caries; T. controversa; Urocystis species, such as, for example, Urocystis occulta; Ustilago species, such as, for example, Ustilago nuda; U. nuda tritici;

Fruit rot caused, for example, by Aspergillus species, such as, for example, Aspergillus flavus; Botrytis species, such as, for example, Botrytis cinerea; Penicillium species, such as, for example, Penicillium expansum and P. purpurogenum; Sclerotinia species, such as, for example, Sclerotinia sclerotiorum; Verticilium species, such as, for example, Verticilium alboatrum;

Seed- and soil-borne rot and wilt diseases, and also diseases of seedlings, caused, for example, by Fusarium species, such as, for example, Fusarium culmorum; Phytophthora species, such as, for example, Phytophthora cactorum; Pythium species, such as, for example, Pythium ultimum; Rhizoctonia species, such as, for example, Rhizoctonia solani; Sclerotium species, such as, for example, Sclerotium rolfsii;

Cancerous diseases, galls and witches' broom caused, for example, by Nectria species, such as, for example, Nectria galligena;

Wilt diseases caused, for example, by Monilinia species, such as, for example, Monilinia laxa;

Deformations of leaves, flowers and fruits caused, for example, by Taphrina species, such as, for example, Taphrina deformans;

Degenerative diseases of woody plants caused, for example, by Esca species, such as, for example, Phaemoniella clamydospora and Phaeoacremonium aleophilum and Fomitiporia mediterranea;

Diseases of flowers and seeds caused, for example, by Botrytis species, such as, for example, Botrytis cinerea;

Diseases of plant tubers caused, for example, by Rhizoctonia species, such as, for example, Rhizoctonia solani; Helminthosporium species, such as, for example, Helminthosporium solani;

Diseases caused by bacteriopathogens, such as, for example, Xanthomonas species, such as, for example, Xanthomonas campestris pv. oryzae; Pseudomonas species, such as, for example, Pseudomonas syringae pv. lachrymans; Erwinia species, such as, for example, Erwinia amylovora.

Preference is given to controlling the following diseases of soya beans:

Fungal diseases on leaves, stems, pods and seeds caused, for example, by alternaria leaf spot (Alternaria spec. atrans tenuissima), anthracnose (Colletotrichum gloeosporoides dematium var. truncatum), brown spot (Septoria glycines), cercospora leaf spot and blight (Cercospora kikuchii), choanephora leaf blight (Choanephora infundibulifera trispora (Syn.)), dactuliophora leaf spot (Dactuliophora glycines), downy mildew (Peronospora manshurica), drechslera blight (Drechslera glycini), frogeye leaf spot (Cercospora sojina), leptosphaerulina leaf spot (Leptosphaerulina trifolii), phyllostica leaf spot (Phyllosticta sojaecola), pod and stem blight (Phomopsis sojae), powdery mildew (Microsphaera diffusa), pyrenochaeta leaf spot (Pyrenochaeta glycines), rhizoctonia aerial, foliage, and web blight (Rhizoctonia solani), rust (Phakopsora pachyrhizi Phakopsora meibomiae), scab (Sphaceloma glycines), stemphylium leaf blight (Stemphylium botryosum), target spot (Corynespora cassiicola).

Fungal diseases on roots and the stem base caused, for example, by black root rot (Calonectria crotalariae), charcoal rot (Macrophomina phaseolina), fusarium blight or wilt, root rot, and pod and collar rot (Fusarium oxysporum, Fusarium orthoceras, Fusarium semitectum, Fusarium equiseti), mycoleptodiscus root rot (Mycoleptodiscus terrestris), neocosmospora (Neocosmopspora vasinfecta), pod and stem blight (Diaporthe phaseolorum), stem canker (Diaporthe phaseolorum var. caulivora), phytophthora rot (Phytophthora megasperma), brown stem rot (Phialophora gregata), pythium rot (Pythium aphanidermatum, Pythium irregulare, Pythium debaryanum, Pythium myriotylum, Pythium ultimum), rhizoctonia root rot, stem decay, and damping-off (Rhizoctonia solani), sclerotinia stem decay (Sclerotinia sclerotiorum), sclerotinia Southern blight (Sclerotinia rolfsii), thielaviopsis root rot (Thielaviopsis basicola).

It is also possible to control resistant strains of the organisms mentioned above.

Microorganisms capable of degrading or changing the industrial materials which may be mentioned are, for example, bacteria, fungi, yeasts, algae and slime organisms. The active compounds according to the invention preferably act against fungi, in particular moulds, wood-discolouring and wood-destroying fungi (Basidiomycetes) and against slime organisms and algae. Microorganisms of the following genera may be mentioned as examples: Alternaria, such as Alternaria tenuis, Aspergillus, such as Aspergillus niger, Chaetomium, such as Chaetomium globosum, Coniophora, such as Coniophora puetana, Lentinus, such as Lentinus tigrinus, Penicillium, such as Penicillium glaucum, Polyporus, such as Polyporus versicolor, Aureobasidium, such as Aureobasidium pullulans, Sclerophoma, such as Sclerophoma pityophila, Trichoderma, such as Trichoderma viride, Escherichia, such as Escherichia coli, Pseudomonas, such as Pseudomonas aeruginosa, and Staphylococcus, such as Staphylococcus aureus.

In addition, the compounds of the formula (I) according to the invention also have very good antimycotic activity. They have a very broad antimycotic activity spectrum in particular against dermatophytes and yeasts, moulds and diphasic fungi (for example against Candida species such as Candida albicans, Candida glabrata) and Epidermophyton floccosum, Aspergillus species such as Aspergillus niger and Aspergillus fumigatus, Trichophyton species such as Trichophyton mentagrophytes, Microsporon species such as Microsporon canis and audouinii. The list of these fungi by no means limits the mycotic spectrum which can be covered, but is only for illustration.

When applying the compounds according to the invention the application rates can be varied within a broad range. The dose of active compound/application rate usually applied in the method of treatment according to the invention is generally and advantageously

- for treatment of part of plants, e.g. leafs (foliar treatment): from 0.1 to 10,000 g/ha, preferably from 10 to 1,000 g/ha, more preferably from 50 to 300 g/ha; in case of drench or drip application, the dose can even be reduced, especially while using inert substrates like rockwool or perlite;
- for seed treatment: from 2 to 200 g per 100 kg of seed, preferably from 3 to 150 g per 100 kg of seed, more preferably from 2.5 to 25 g per 100 kg of seed, even more preferably from 2.5 to 12.5 g per 100 kg of seed;
- for soil treatment: from 0.1 to 10,000 g/ha, preferably from 1 to 5,000 g/ha.

The doses herein indicated are given as illustrative examples of the method according to the invention. A person skilled in the art will know how to adapt the application doses, notably according to the nature of the plant or crop to be treated.

The combination according to the invention can be used in order to protect plants within a certain time range after the treatment against pests and/or phytopathogenic fungi and/or microorganisms. The time range, in which protection is effected, spans in general 1 to 28 days, preferably 1 to 14 days, more preferably 1 to 10 days, even more preferably 1 to 7 days after the treatment of the plants with the combinations or up to 200 days after the treatment of plant propagation material.

Furthermore combinations and compositions according to the invention may also be used to reduce the contents of mycotoxins in plants and the harvested plant material and therefore in foods and animal feed stuff made therefrom. Especially but not exclusively the following mycotoxins can be specified: Deoxynivalenole (DON), Nivalenole, 15-Ac-DON, 3-Ac-DON, T2- und HT2- Toxins, Fumonisines, Zearalenone Moniliformine, Fusarine, Diaceotoxyscirpenole (DAS), Beauvericine, Enniatine, Fusaroproliferine, Fusarenole, Ochratoxines, Patuline, Ergotalkaloides und Aflatoxines, which are caused for example by the following fungal diseases: *Fusarium spec.,* like *Fusarium acuminatum, F. avenaceum, F. crookwellense, F. culmorum, F. graminearum (Gibberella zeae), F. equiseti, F. fujikoroi, F. musarum, F. oxysporum, F. proliferatum, F. poae, F. pseudograminearum, F. sambucinum, F. scirpi, F. semitectum, F. solani, F. sporotrichoides, F. langsethiae, F. subglutinans, F. tricinctum, F. verticillioides* and others but also by *Aspergillus spec., Penicillium spec., Claviceps purpurea, Stachybotrys spec.* and others.

The present invention further relates to a composition as herein-defined comprising at least one further active ingredient selected from the group of the insecticides, attractants, sterilants, bactericides, acaricides, nematicides, fungicides, growth regulators, herbicides, fertilizers, safeners and semiochemicals.

The present invention further relates to a method for controlling phytopathogenic harmful fungi, characterized in that an active compound combination as herein-defined is applied to the phytopathogenic harmful fungi and/or their habitat.

The present invention further relates to a process for producing compositions for controlling phytopathogenic harmful fungi, characterized in that an active compound combination as herein-defined is mixed with extenders and/or surfactants.

The present invention further relates to the use of an active compound combination as herein-defined for control of phytopathogenic harmful fungi.

The present invention further relates to the use of an active compound combination as herein-defined for the treatment of transgenic plants.

The present invention further relates to the use of an active compound combination as herein-defined for the

treatment of seed and of seed of transgenic plants.

N-cyclopropyl amides of formula (I) wherein T represents an oxygen atom, can be prepared by condensation of a substituted N-cyclopropyl benzylamine with 3-(difluoromethyl)-5-fluoro-1-methyl-1H-pyrazole-4-carbonyl chloride according to WO-2007/087906 (process P1) and WO-2010/130767 (process P1 - step 10).

Substituted N-cyclopropyl benzylamines are known or can be prepared by known processes such as the reductive amination of a substituted aldehyde with cyclopropanamine *(*J. Med. Chem., 2012, 55 (1), 169-196) or by nucleophilic substitution of a substituted benzyl alkyl (or aryl)sulfonate or a substituted benzyl halide with cyclopropanamine *(*Bioorg. Med. Chem., 2006, 14, 8506-8518 and WO-2009/140769).

3-(difluoromethyl)-5-fluoro-1-methyl-1H-pyrazole-4-carbonyl chloride can be prepared according to WO-2010/130767 (process P1 - steps 9 or 11)

N-cyclopropyl thioamides of formula (I) wherein T represents a sulfur atom, can be prepared by thionation of a N-cyclopropyl amide of formula (I) wherein T represents a oxygen atom, according to WO-2009/016220 (process P1) and WO-2010/130767 (process P3).

The following examples illustrate in a non limiting manner the preparation of the compounds of formula (I) according to the invention.

Preparation of N-cyclopropyl-3-(difluoromethyl)-5-fluoro-N-(2-isopropylbenzyl)-1-methyl-1H-pyrazole-4-carboxamide (compound A1)

Step A : preparation of N-(2-isopropylbenzyl)cyclopropanamine

To a solution of 55.5 g (971 mmol) of cyclopropanamine in 900 mL of methanol, are successively added 20 g of 3 Å molecular sieves and 73 g (1.21 mol) of acetic acid. 72 g (486 mmol) of 2-isopropyl-benzaldehyde are then added dropwise and the reaction mixture is further heated at reflux for 4 hours.

The reaction mixture is then cooled to 0 °C and 45. 8 g (729 mmol) of sodium cyanoborohydride are added by portion in 10 min and the reaction mixture is stirred again for 3 hours at reflux. The cooled reaction mixture is filtered over a cake of diatomaceous earth. The cake is washed abundantly by methanol and the methanolic extracts are concentrated under vacuum. Water is then added to the residue and the pH is adjusted to 12 with 400 mL of a 1 N aqueous solution of sodium hydroxide. The watery layer is extracted with ethyl acetate, washed by water (2 x 300 mL) and dried over magnesium sulfate to yield 81.6 g (88%) of N-(2-isopropylbenzyl)cyclopropanamine as a yellow oil used as such in the next step.

The hydrochloride salt can be prepared by dissolving N-(2-isopropylbenzyl)cyclopropanamine in diethyl-ether (1.4 mL / g) at 0 °C followed by addition of a 2 M solution of hydrochloric acid in diethylether (1.05 eq.). After a 2 hours stirring, N-(2-isopropylbenzyl)cyclopropanamine hydrochloride (1:1) is filtered off, washed by diethylether and dried under vacuum at 40 °C for 48 hours . Mp (melting point) = 149 °C

Step B : preparation of N-cyclopropyl-3-(difluoromethyl)-5-fluoro-N-(2-isopropylbenzyl)-1-methyl-1 H-pyrazole-4-carboxamide

To 40.8 g (192 mmol) of N-(2-isopropylbenzyl)cyclopropanamine in 1 L of dry tetrahydrofurane are added at room temperature, 51 mL (366 mmol) of triethylamine. A solution of 39.4 g (174 mmol) of 3-(difluoromethyl)-5-fluoro-1-methyl-1H-pyrazole-4-carbonyl chloride in 800 mL of dry tetrahydrofurane is then added dropwise while maintaining the temperature below 34 °C. The reaction mixture is heated at reflux for 2 hours then left overnight at room temperature. Salts are filtered off and the filtrate is concentrated under vacuum to yield 78.7 g of a brown oil. Column chromatography on silica gel (750 g - gradient n-heptane/ethyl acetate) yields 53 g (71% yield) of N-cyclopropyl-3-(difluoromethyl)-5-fluoro-N-(2-isopropylbenzyl)-1-methyl-1H-pyrazole-4-carboxamide as a yellow oil that slowly crystallizes. Mp = 76-79 °C.

In the same way, compounds A2 to A19 can be prepared according to the preparation described for compound A1.

Preparation of N-cyclopropyl-3-(difluoromethyl)-5-fluoro-N-(2-isopropylbenzyl)-1-methyl-1H-pyrazole-4-carbothioamide (compound A20)

A solution of 14.6 g (65 mmol) of phosphorus pentasulfide and 48 g (131 mmol) of N-cyclopropyl-3-(difluoromethyl)-5-fluoro-N-(2-isopropylbenzyl)-1-methyl-1H-pyrazole-4-carboxamide in 500 ml of dioxane are heated at 100 °C for 2 hours. 50 ml of water are then added and the reaction mixture is further heated at 100 °C for another hour. The cooled reaction mixture is filtered over a basic alumina cartridge. The cartridge is washed by dichloromethane and the combined organic extracts are dried over magnesium sulfate and concentrated under vacuum to yield 55.3 g of an orange oil. The residue is tritured with a few mL of diethylether until crystallisation occurs. Crystals are filtered off and

dried under vacuum at 40 °C for 15 hours to yield 46.8 g (88% yield) of N-cyclopropyl-3-(difluoromethyl)-5-fluoro-N-(2-isopropylbenzyl)-1-methyl-1H-pyrazole-4-carbothioamide. Mp = 64-70 °C.

Table 1 provides the logP and NMR data ($^{1}H$) of compounds A1 to A20.

In table 1, the logP values were determined in accordance with EEC Directive 79/831 Annex V.A8 by HPLC (High Performance Liquid Chromatography) on a reversed-phase column (C 18), using the method described below :

Temperature: 40 °C ; Mobile phases : 0.1% aqueous f ormic acid and acetonitrile ; linear gradient from 10% acetonitrile to 90% acetonitrile.

Calibration was carried out using unbranched alkan-2-ones (comprising 3 to 16 carbon atoms) with known logP values (determination of the logP values by the retention times using linear interpolation between two successive alkanones). lambda-max-values were determined using UV-spectra from 200 nm to 400 nm and the peak values of the chromatographic signals.

| Cmpd | logP | NMR |
|---|---|---|
| A1 | 3.35 | $^{1}H$ NMR (500 MHz, $CHCl_3$-d): δ ppm 0.64 (bs, 4H), 1.21 (d, J=6.60 Hz, 6H), 2.44 - 2.80 (m, 1H), 3.01 - 3.29 (m, 1H), 3.78 (s, 3H), 4.76 (bs, 2H), 6.89 (t, J=54.70 Hz, 1H), 7.12 - 7.33 (m, 4H). |
| A2 | 3.44 | $^{1}H$ NMR (500 MHz, $CHCl_3$-d): δ ppm 0.47 - 0.77 (m, 6H), 0.80 - 1.04 (m, 2H), 1.92 (bs, 1H), 2.66 (bs, 1H), 3.80 (s, 3H), 4.92 (bs, 2H), 6.90 (t, J=54.50 Hz, 1H), 7.01 - 7.25 (m, 4H). |
| A3 | 4.06 | $^{1}H$ NMR (500 MHz, $CHCl_3$-d): δ ppm 0.61 (bs, 4H), 1.46 (s, 9H), 2.77 - 2.98 (m, 1H), 3.89 (s, 3H), 5.05 (bs, 2 H), 6.91 (t, J=54.70 Hz, 1H), 7.20 (bs, 3H), 7.35 - 7.48 (m, 1H). |
| A4 | 3.76 | $^{1}H$ NMR (300 MHz, $CHCl_3$-d): δ ppm 0.65 - 0.69 (m, 4H), 1.21 (t, 3H), 2.62 - 2.64 (m, 3H), 3.81 (s, 3H), 4.70 (s, 2H), 6.85 (t, J=54.6 Hz, 1H), 7.04 - 7.22 (m, 3H). |
| A5 | 4.09 | $^{1}H$ NMR (500 MHz, $CHCl_3$-d): δ ppm 0.63 - 0.73 (m, 4H), 1.22 (d, J=6.92 Hz, 6H), 2.59 - 2.87 (m, 1H), 2.98 - 3.30 (m, 1H), 3.82 (s, 3H), 4.74 (bs, 2H), 6.88 (t, J=54.40 Hz, 1H), 7.20 - 7.27 (m, 3H). |
| A6 | 3.41 | $^{1}H$ NMR (300 MHz, $CHCl_3$-d): δ ppm 0.65 - 0.66 (m, 4H), 1.21 (t, 3H), 2.62 (q, 2H), 2.64 (bs, 1H), 3.81 (s, 3H), 4.71 (s, 2H), 6.86 (t, J=54.6 Hz, 1H), 6.89 - 6.95 (m, 2H), 7.13 - 7.18 (m, 1H). |

| Cmpd | logP | NMR |
|---|---|---|
| A7 | 3.70 | $^1$H NMR (300 MHz, $CHCl_3$-d): δ ppm 0.65 - 0.69 (m, 4H), 1.22 (d, 6H), 2.69 (bs, 1H), 3.10 - 3.14 (m, 1H), 3.81 (s, 3H), 4.75 (s, 2H), 6.86 (t, J=54.6 Hz, 1H), 6.88 - 6.93 (m, 2H), 7.23 - 7.28 (m, 1H). |
| A8 | 3.46 | $^1$H NMR (300 MHz, $CHCl_3$-d): δ ppm 0.60 - 0.66 (m, 6H), 0.89 - 0.95 (m, 2H), 1.82 - 1.84 (m, 1H), 2.73 (bs, 1H), 3.81 (s, 3H), 4.89 (s, 2H), 6.68 - 6.99 (m, 4H). |
| A9 | 4.21 | $^1$H NMR (300 MHz, $CHCl_3$-d): δ ppm 0.64 - 0.68 (m, 4H), 1.56-1.62 (m, 2H), 1.62 - 1.70 (m, 2H), 1.76 - 1.83 (m, 2H), 1.96 - 2.05 (m, 2H), 2.71 (bs, 1H), 3.13 - 3.19 (m, 1H), 3.81 (s, 3H), 4.76 (s, 2H), 6.86 (t, J=54.0 Hz, 1H), 6.87 - 6.97 (m, 2H), 7.23 - 7.28 (m, 1H). |
| A10 | 3.65 | $^1$H NMR (400 MHz, $CHCl_3$-d): δ ppm 0.65 (bs, 4H), 1.21 (d, J=6.75 Hz, 5H), 2.29 - 2.59 (m, 1H), 3.00 - 3.36 (m, 1H), 3.79 (s, 3H), 4.83 (s, 2H), 6.68 - 7.06 (m, 2H), 7.13 (d, J=7.78 Hz, 1H), 7.27 - 7.33 (m, 1H). |
| A11 | 3.70 | $^1$H NMR (500 MHz, $CHCl_3$-d): δ ppm 0.65 (bs, 4H), 2.31 (s, 3H), 2.64 (m, 1H), 3.81 (s, 3H), 4.73 (bs, 2H), 6.89 (t, J=54.6 Hz, 1H), 7.01-7.14 (m, 3H). |
| A12 | 3.99 | $^1$H NMR (500 MHz, $CHCl_3$-d): δ ppm 0.66 (bs, 4H), 1.22 (d, J=6.97 Hz, 6H), 2.31 (s, 3H), 2.54 - 2.75 (m, 1H), 2.99 - 3.25 (m, 1H), 3.81 (s, 3H), 4.75 (bs, 2H), 6.89 (t, J=53.90Hz, 1H), 7.01 - 7.23 (m, 3H). |
| A13 | 3.76 | $^1$H NMR (500 MHz, $CHCl_3$-d): δ ppm 0.61 - 0.68 (m, 6H), 0.80 - 1.00 (m, 2H), 1.74 - 2.00 (m, 1H), 2.31 (s, 3H), 2.53 - 2.82 (m, 1H), 3.81 (s, 3H), 4.89 (bs, 2H), 6.83 (t, J=54.80 Hz, 1H), 6.91 - 7.06 (m, 3H). |
| A14 | 4.36 | $^1$H NMR (500 MHz, $CHCl_3$-d): δ ppm 0.62 (m, 4H), 1.44 (s, 9H), 2.28 (s, 3H), 2.74 - 3.02 (m, 1H), 3.83 (bs, 3H), 5.02 (bs, 2H), 6.85 (t, J=54.40 Hz, 1 H), 7.01 (bs, 1H), 7.21 - 7.29 (m, 2 H). |
| A15 | 3.80 | $^1$H NMR (500 MHz, $CHCl_3$-d): δ ppm 0.50 - 0.67 (m, 4H), 2.81 (bs, 1H), 3.78 (s, 3H), 4.85 (bs, 2H), 6.78 (t, J=55.00 Hz, 1H), 7.20 - 7.29 (m, 2H), 7.54 (d, J=8.17 Hz, 1H). |
| A16 | 3.78 | $^1$H NMR (500 MHz, $CHCl_3$-d): δ ppm 0.55 - 0.70 (m, 4H), 2.37 (s, 3H), 2.72 - 3.04 (m, 1H), 3.83 (bs, 3H), 4.91 (bs, 2H), 6.86 (t, J=54.50 Hz, 1H), 7.10 - 7.20 (m, 2H), 7.54 (d, J=7.89 Hz, 1H). |

| Cmpd | logP | NMR |
|---|---|---|
| A17 | 3.46 | $^1$H NMR (500 MHz, $CHCl_3$-d): δ ppm 0.47 - 0.64 (m, 4H), 2.29 - 2.55 (m, 1H), 3.80 (s, 3H), 5.05 (s, 2H), 6.95 (t, J=54.40 Hz, 1H), 7.40 (t, J=7.86 Hz, 1H), 7.60 - 7.70 (dd, 2H). |
| A18 | 3.62 | $^1$H NMR (500 MHz, $CHCl_3$-d): δ ppm 0.50 - 0.74 (m, 4H), 2.45 - 2.71 (m, 1H), 3.81 (s, 3H), 4.99 (s, 2H), 6.91 (t, J=54.40 Hz, 1H), 7.45 - 7.57 (m, 2H). |
| A19 | 4.04 | $^1$H NMR (500 MHz, $CHCl_3$-d): δ ppm 0.65 (bs, 4H), 1.20 (t, J=7.43 Hz, 3H), 2.22 (s, 3H), 2.24 (s, 3H), 2.58 - 2.64 (m, 2H), 3.80 (s, 3H), 4.70 (bs, 2H), 6.89 (t, J=54.70 Hz, 3H), 6.98 (bs, 2H). |
| A20 | 4.36 | $^1$H NMR (500 MHz, $CHCl_3$-d): δ ppm 0.55 - 0.84 (m, 4H), 1.27 (d, J=6.97 Hz, 6H), 2.73 - 2.85 (m, 1H), 3.04 - 3.23 (m, 1H), 3.80 (s, 3H), 4.60 - 5.06 (m, 1H), 6.99 - 7.38 (m, 5H). |

Preparation of 5-fluoro-4-imino-3-methyl-1-[(4-methyphenyl)sulfonyl]-3,4-dihydropyrimidin-2(1H)-one (also named 5-fluoro-4-imino-3-methyl-1-(p-tolylsulfonyl)pyrimidin-2-one)

Step A: Preparation of 5-fluoro-4-imino-1-[(4-methylphenyl)sulfonyl]-3,4-dihydropyrimidin-2(1H)-one (also named 5-fluoro-4-imino-1-(p-tolylsulfonyl)pyrimidin-2-one)

1.76 g (8.63 mmol) of N,O-Bis(trimethylsilyl)acetamide is added at room temperature to a stirred suspension of 1.01 g (7.85 mmol) of 5-fluorcytosine in 5 mL of acetonitrile and heated at 70 °C for 45 minutes. The clear yellow solution is cooled to 5 °C, 1.65 g (8.63 mmo l) of 4-toluenesulfonyl chloride is added and the mixture is kept at 5 °C for 1 hour. The suspension is warmed to room temperature overnight, poured into 75 mL of cold water and stirred for 1 hour. The white precipitate is collected, washed with plenty of water and dried by suction in air to yield 1.74 g (73 % yield) of 5-fluoro-4-imino-1-(p-tolylsulfonyl)pyrimidin-2-one as a fine white powder.
logP 1.45
$^1$H NMR (400 MHz, DMSO-d6): δ ppm 2.41 (s, 3H), 7.45 (d, J=8.1 Hz, 2H), 7.89 (d, J=8.4 Hz, 2H), 8.24 (bs, 1H), 8.28 (d, J=6.6 Hz, 1H), 8.51 (bs, 1H).

Step B: Preparation of 5-fluoro-4-imino-3-methyl-1-[(4-methylphenyl)sulfonyl]-3,4-dihydropyrimidin-2(1H)-one (also named 5-fluoro-4-imino-3-methyl-1-(p-tolylsulfonyl)pyrimidin-2-one)

To a golden yellowish suspension of 490 mg (1.62 mmol) of 5-fluoro-4-imino-1-(p-tolylsulfonyl)pyrimidin-2-one and 1.05 g (3.24 mmol) of cesium carbonate in 3.2 mL of N,N-dimethylformamide is added 696 mg (4.85 mmol) of iodomethane. The resulting orange suspension is stirred at 40 °C for 4 hours. The reaction mi xture is then cooled to room temperature, diluted with 40 mL of ethyl acetate and washed with 40 mL of water. The aqueous phase is extracted with ethyl acetate (3 X 30 mL), the combined yellow organic phases are dried over magnesium sulfate and the volatiles are removed. The obtained orange oil is purified by column chromatography on silica (12 g - gradient cyclohexane/ethyl acetate) to yield 49.2 mg (9 % yield) of 5-fluoro-4-imino-3-methyl-1-(p-tolylsulfonyl)pyrimidin-2-one as a white solid.
logP 1.26
$^1$H NMR (400 MHz, DMSO-d6): δ ppm 2.43 (s, 3H), 3.12 (s, 3H), 7.48 (d, J=8.1 Hz, 2H), 7.92 (d, J=8.4 Hz, 2H), 8.01 (d, J=6.0 Hz, 1H), 8.65 (bs, 1H).
2-[4-(4-chlorophenoxy)-2-(trifluoromethyl)phenyl]-3-methyl-1-(1H-1,2,4-triazol-1-yl)butan-2-ol is an International standard named ipfentrifluconazole (ISO nomenclature), for which technical specifications, references and explanations including the way to produce it, are published, easily available and understable for the skilled man.

Preparation of (2E,3Z)-5-{[1-(4-chloro-2-fluorophenyl)-1H-pyrazol-3-yl]oxy}-2-(methoxyimino)-N,3-dimethylpent-3-enamide and (2E,3Z)-5-{[1-(4-chlorophenyl)-1H-pyrazol-3-yl]oxy}-2-(methoxyimino)-N,3-dimethylpent-3-enamide

A solution of compound methyl (2E,3Z)-5-{[1-(4-chloro-2-fluorophenyl)-1H-pyrazol-3-yl]oxy}-2-(methoxyimino)-3-methylpent-3-enoate (1.40 g) in $MeNH_2$ (30-40% in EtOH, 20.00 mL) was stirred at 20°C for 5 hours. TLC (Petroleum ether : Ethyl acetate=1:1, $R_f$=0.4) showed the reaction was complete. The mixture was concentrated and purified by prep-HPLC (neutral) to give (2E,3Z)-5-{[1-(4-chloro-2-fluorophenyl)-1H-pyrazol-3-yl]oxy}-2-(methoxyimino)-N,3-dimethylpent-3-enamide (540.0 mg, 1.4 mmol, yield 13.0%) as white solid.
$^1$H NMR: 400 MHz DMSO
δ 8.12 (d, J=4.4 Hz, 1 H), 8.00 (br, 1 H), 7.74-7.67 (m, 1 H), 7.67-7.65 (d, J=9.6, 1 H), 7.39-7.37 (d, J=8.4 Hz, 1 H), 6.02-5.97 (m, 1 H), 5.82-5.97 (m, 1 H), 4.43-4.41 (d, *J*=6.2 Hz, 2 H), 3.88 (s, 3 H), 2.69 - 2.68 (d, J=4.4, 3 H), 1.81 (s, 3 H).
MS: $M+H^+$ =381.1

Starting material methyl (2E,3Z)-5-{[1-(4-chloro-2-fluorophenyl)-1H-pyrazol-3-yl]oxy}-2-(methoxyimino)-3-methylpent-3-enoate can be prepared according to methods described in WO2013/092224 and WO2014/202421.

In the same way, (2E,3Z)-5-{[1-(4-chlorophenyl)-1H-pyrazol-3-yl]oxy}-2-(methoxyimino)-N,3-dimethylpent-3-enamide can be prepared from methyl (2E,3Z)-5-{[1-(4-chlorophenyl)-1H-pyrazol-3-yl]oxy}-2-(methoxyimino)-3-methylpent-3-enoate according to the preparation described for (2E,3Z)-5-{[1-(4-chloro-2-fluorophenyl)-1H-pyrazol-3-yl]oxy}-2-(methoxyimino)-N,3-dimethylpent-3-enamide.

The advanced fungicidal activity of the active compound combinations according to the invention is evident from the example below. While the individual active compounds exhibit weaknesses with regard to the fungicidal activity, the combinations have an activity which exceeds a simple addition of activities.

A synergistic effect of fungicides is always present when the fungicidal activity of the active compound combinations exceeds the total of the activities of the active compounds when applied individually. The expected activity for a given combination of two active compounds can be calculated as follows (cf. Colby, S.R., "Calculating Synergistic and Antagonistic Responses of Herbicide Combinations", Weeds 1967, 15, 20-22):
If

- X is the efficacy when active compound A is applied at an application rate of m ppm (or g/ha),
- Y is the efficacy when active compound B is applied at an application rate of n ppm (or g/ha),
- E is the efficacy when the active compounds A and B are applied at application rates of m and n ppm (or g/ha), respectively, and

Then

$$E = X + Y - \frac{X \cdot Y}{100}$$

The degree of efficacy, expressed in % is denoted. 0 % means an efficacy which corresponds to that of the control while an efficacy of 100 % means that no disease is observed.

If the actual fungicidal activity exceeds the calculated value, then the activity of the combination is superadditive, i.e. a synergistic effect exists. In this case, the efficacy which was actually observed must be greater than the value for the expected efficacy (E) calculated from the abovementioned formula.

A further way of demonstrating a synergistic effect is the method of Tammes (cf. "Isoboles, a graphic representation of synergism in pesticides" in Neth. J. Plant Path., 1964, 70, 73-80).

**Example A: *in vivo* preventive *Septoria tritici* test (wheat)**

| | | |
|---|---|---|
| Solvent: | 49 | parts by weight of N,N-dimethylacetamide |
| Emulsifier: | 1 | part by weight of alkylaryl polyglycol ether |

To produce a suitable preparation of active compound, 1 part by weight of active compound or active compound combination is mixed with the stated amounts of solvent and emulsifier, and the concentrate is diluted with water to the

desired concentration.

To test for preventive activity, young plants are sprayed with the preparation of active compound or active compound combination at the stated rate of application.

After the spray coating has been dried, the plants are sprayed with a spore suspension of ***Septoria tritici.*** The plants remain for 48 hours in an incubation cabinet at approximately 20°C and a relative atmospher ic humidity of approximately 100% and afterwards for 60 hours at approximately 15°C in a translucent incu bation cabinet at a relative atmospheric humidity of approximately 100%.

The plants are placed in the greenhouse at a temperature of approximately 15°C and a relative atmosphe ric humidity of approximately 80%.

The test is evaluated 21 days after the inoculation. 0% means an efficacy which corresponds to that of the untreated control, while an efficacy of 100% means that no disease is observed.

The table below clearly shows that the observed activity of the active compound combination is greater than the calculated activity, i.e. a synergistic effect is present.

**Table A: *in vivo* preventive *Septoria tritici* test (wheat; not according to the invention**

| Active compounds | Application rate of active compound in ppm a.i. | Efficacy in % | |
|---|---|---|---|
| | | found* | calc.** |
| (A) N-(5-chloro-2-isopropylbenzyl)-N-cyclopropyl-3-(difluoromethyl)-5-fluoro-1-methyl-1 H-pyrazole-4-carboxamide | 10 | 29 | |
| (B1) 5-fluoro-4-imino-3-methyl-1-[(4-methylphenyl)sulfonyl]-3,4-dihydropyrimidin-2(1H)-one | 30 | 0 | |
| (A) + (B1) 1:3 | 10 + 30 | 57 | 29 |
| found = activity found<br>** calc. = activity calculated using Colby's formula | | | |

**Example B: *in vivo* preventive *Puccinia triticina* test (wheat)**

| | | |
|---|---|---|
| Solvent: | 49 | parts by weight of N,N-dimethylacetamide |
| Emulsifier: | 1 | part by weight of alkylaryl polyglycol ether |

To produce a suitable preparation of active compound, 1 part by weight of active compound or active compound combination is mixed with the stated amounts of solvent and emulsifier, and the concentrate is diluted with water to the desired concentration.

To test for preventive activity, young plants are sprayed with the preparation of active compound or active compound combination at the stated rate of application.

After the spray coating has been dried, the plants are sprayed with a spore suspension of ***Puccinia triticina.*** The plants remain for 48 hours in an incubation cabinet at approximately 20°C and a relative atmospher ic humidity of approximately 100%.

The plants are placed in the greenhouse at a temperature of approximately 20°C and a relative atmosphe ric humidity of approximately 80%.

The test is evaluated 8 days after the inoculation. 0% means an efficacy which corresponds to that of the untreated control, while an efficacy of 100% means that no disease is observed.

The table below clearly shows that the observed activity of the active compound combination according to the invention is greater than the calculated activity, i.e. a synergistic effect is present.

**Table B1: *in vivo* preventive *Puccinia triticina* test (wheat; not according to the invention**

| Active compounds | Application rate of active compound in ppm a.i. | Efficacy in % found* | Efficacy in % calc.** |
|---|---|---|---|
| (A) N-(5-chloro-2-isopropylbenzyl)-N-cyclopropyl-3-(difluoromethyl)-5-fluoro-1-methyl-1 H-pyrazole-4-carboxamide | 30 | 75 | |
| (B1) 5-fluoro-4-imino-3-methyl-1-[(4-methylphenyl)sulfonyl]-3,4-dihydropyrimidin-2(1H)-one | 30 | 0 | |
| (A) + (B1) 1:1 | 30 + 30 | 94 | 75 |
| found = activity found<br>** calc. = activity calculated using Colby's formula | | | |

**Table B2: *in vivo* preventive *Puccinia triticina* test (wheat)**

| Active compounds | Application rate of active compound in ppm a.i. | Efficacy in % found* | Efficacy in % calc. ** |
|---|---|---|---|
| (A) N-(5 -chloro-2-isopropylbenzyl)-N-cyclopropyl-3-(difluoromethyl)-5-fluoro-1-methyl-1H-pyrazole-4-carboxamide | 20<br>10<br>5 | 70<br>40<br>30 | |
| (B2) 2-[4-(4-chlorophenoxy)-2-(trifluoromethyl)phenyl]-3-methyl-1-(1,2,4-triazol-1-yl)butan-2-ol | 200<br>100<br>50<br>30 | 40<br>30<br>10<br>0 | |
| (A) + (B2) 1:3 | 10 + 30 | 60 | 40 |
| (A) + (B2) 1:10 | 20 + 200 | 90 | 82 |
| (A) + (B2) 1:10 | 10 + 100 | 70 | 58 |
| (A) + (B2) 1:10 | 5 + 50 | 50 | 37 |
| * found = activity found<br>** calc. = activity calculated using Colby's formula | | | |

**Example C: *in vivo* preventive *Blumeria* test (barley)**

| | | |
|---|---|---|
| Solvent: | 49 | parts by weight of N,N-dimethylacetamide |
| Emulsifier: | 1 | part by weight of alkylaryl polyglycol ether |

To produce a suitable preparation of active compound, 1 part by weight of active compound or active compound combination is mixed with the stated amounts of solvent and emulsifier, and the concentrate is diluted with water to the desired concentration.

To test for preventive activity, young plants are sprayed with the preparation of active compound or active compound combination at the stated rate of application. After the spray coating has been dried, the plants are dusted with spores of ***Blumeria graminis f.sp. hordei.***

The plants are placed in the greenhouse at a temperature of approximately 18°C and a relative atmospheric humidity of approximately 80% to promote the development of mildew pustules.

The test is evaluated 7 days after the inoculation. 0% means an efficacy which corresponds to that of the untreated control, while an efficacy of 100% means that no disease is observed. The table below clearly shows that the observed activity of the active compound combination according to the invention is greater than the calculated activity,

i.e. a synergistic effect is present.

**Table C: *in vivo* preventive *Blumeria* test (barley)**

| Active compounds | Application rate of active compound in ppm a.i. | Efficacy in % found* | calc. ** |
|---|---|---|---|
| (A) N-(5 -chloro-2-isopropylbenzyl)-N-cyclopropyl-3-(difluoromethyl)-5-fluoro-1-methyl-1H-pyrazole-4-carboxamide | 20<br>10<br>5 | 40<br>20<br>0 | |
| (B2) 2-[4-(4-chlorophenoxy)-2-(trifluoromethyl)phenyl]-3-methyl-1-(1,2,4-triazol-1-yl)butan-2-ol | 100<br>60<br>50<br>30 | 70<br>60<br>30<br>0 | |
| (A) + (B2) 1:3 | 20 + 60 | 80 | 76 |
| (A) + (B2) 1:3 | 10 + 30 | 40 | 20 |
| (A) + (B2) 1:6 | 10 + 60 | 80 | 68 |
| (A) + (B2) 1:10 | 10 + 100 | 80 | 76 |
| (A) + (B2) 1:10 | 5 + 50 | 60 | 30 |
| * found = activity found<br>** calc. = activity calculated using Colby's formula | | | |

**Example D: *in vivo* preventive *Pyrenophora teres* test (barley)**

| | | |
|---|---|---|
| Solvent: | 49 | parts by weight of N,N-dimethylacetamide |
| Emulsifier: | 1 | part by weight of alkylaryl polyglycol ether |

To produce a suitable preparation of active compound, 1 part by weight of active compound or active compound combination is mixed with the stated amounts of solvent and emulsifier, and the concentrate is diluted with water to the desired concentration.

To test for preventive activity, young plants are sprayed with the preparation of active compound or active compound combination at the stated rate of application.

After the spray coating has been dried, the plants are sprayed with a spore suspension of ***Pyrenophora teres.*** The plants remain for 48 hours in an incubation cabinet at approximately 20°C and a relative atmospheric humidity of approximately 100%. The plants are placed in the greenhouse at a temperature of approximately 20°C and a relative atmospheric humidity of approximately 80%.

The test is evaluated 8 days after the inoculation. 0% means an efficacy which corresponds to that of the untreated control, while an efficacy of 100% means that no disease is observed. The table below clearly shows that the observed activity of the active compound combination according to the invention is greater than the calculated activity, i.e. a synergistic effect is present.

**Table D: *in vivo* preventive *Pyrenophora teres* test (barley)**

| Active compounds | Application rate of active compound in ppm a.i. | Efficacy in % found * | calc. ** |
|---|---|---|---|
| (A) N-(5 -chloro-2-isopropylbenzyl)-N-cyclopropyl-3-(difluoromethyl)-5-fluoro-1-methyl-1H-pyrazole-4-carboxamide | 10<br>5 | 67<br>44 | |

(continued)

| Active compounds | Application rate of active compound in ppm a.i. | Efficacy in % found * | calc. ** |
|---|---|---|---|
| (B2) 2-[4-(4-chlorophenoxy)-2-(trifluoromethyl)phenyl]-3-methyl-1-(1,2,4-triazol-1-yl)butan-2-ol | 100<br>60<br>50 | 56<br>44<br>22 | |
| (A) + (B2) 1:6 | 10 + 60 | 89 | 81 |
| (A) + (B2) 1:10 | 10 + 100 | 94 | 85 |
| (A) + (B2) 1:10 | 5 + 50 | 67 | 57 |
| * found = activity found<br>** calc. = activity calculated using Colby's formula | | | |

**Example E: *in vitro-test* for the calculation of efficacy with microorganisms**

Wells of 96-well microtiter plates are filled with 10μl of a solution of the test compounds or compound combinations in methanol together with the emulsifier alkylaryl polyglycol ether. Thereafter, the solvent is evaporated in a hood. At the next step, into each well 100μl of liquid potato dextrose medium is given, that has been amended with an appropriate concentration of spores or mycelium suspension of the test fungus.

The resulting concentrations of the test compounds or compound combinations in the microtiter wells are such as 50, 10, 2 and 0.4 ppm. The resulting concentration of the emulsifier in all wells is constantly 300 ppm. With the aid of a photometer the extinction in all wells is measured at the wavelength of 620 nm.

The microtiter plates are then transferred for 3-5 days onto a shaker at 20°C and 85% relative humidity.

At the end of the incubation time the growth of the test organisms is measured again photometrically at the wavelength of 620 nm. The difference between the two extinctions values (taken before and after incubation) is proportional to the growth of the test organism. 0% efficacy means, the difference between the two extinction values is equal or even higher than of the untreated control, 100% efficacy means, no growth of the test organism is detected

**Table E1: *in vitro-test Leptosphaeria nodorum***

| Active compounds | Dosage of active compound in ppm a.i. | Efficacy in % found * | calc. ** |
|---|---|---|---|
| (A) N-(5 -chloro-2-isopropylbenzyl)-N-cyclopropyl-3-(difluoromethyl)-5-fluoro-1-methyl-1H-pyrazole-4-carboxamide | 2.5 | 36 | |
| (B2) 2-[4-(4-chlorophenoxy)-2-(trifluoromethyl)phenyl]-3-methyl-1-(1,2,4-triazol-1-yl)butan-2-ol | 2.5 | 1 | |
| (A) + (B2) 1:1 | 2.5 + 2.5 | 93 | 37 |
| * found = activity found<br>** calc. = activity calculated using Colby's formula | | | |

**Table E2: *in vitro-test Septoria tritici***

| Active compounds | Dosage of active compound in ppm a.i. | Efficacy in % found * | calc. ** |
|---|---|---|---|
| (A) N-(5 -chloro-2-isopropylbenzyl)-N-cyclopropyl-3-(difluoromethyl)-5-fluoro-1-methyl-1H-pyrazole-4-carboxamide | 0.1 | 65 | |

(continued)

| Active compounds | Dosage of active compound in ppm a.i. | Efficacy in % | |
|---|---|---|---|
| | | found * | calc. ** |
| (B2) 2-[4-(4-chlorophenoxy)-2-(trifluoromethyl)phenyl]-3-methyl-1-(1,2,4-triazol-1-yl)butan-2-ol | 0.6<br>0.3<br>0.1 | 0<br>6<br>0 | |
| (A) + (B2) 1:6 | 0.1 + 0.6 | 82 | 65 |
| (A) + (B2) 1:3 | 0.1 + 0.3 | 79 | 67 |
| (A) + (B2) 1:1 | 0.1 + 0.1 | 79 | 65 |
| * found = activity found<br>** calc. = activity calculated using Colby's formula | | | |

## Claims

**1.** An active compound combination comprising

(A) at least N-(5-chloro-2-isopropylbenzyl)-N-cyclopropyl-3-(difluoromethyl)-5-fluoro-1-methyl-1H-pyrazole-4-carboxamide or an agrochemically acceptable salt thereof,
and
(B) at least one further active fungicidal compound B consisting of 2-[4-(4-chlorophenoxy)-2-(trifluoromethyl)phenyl]-3-methyl-1-(1H-1,2,4-triazol-1-yl)butan-2-ol.

**2.** An active compound combination according to claim 1 wherein the compounds (A) and (B) are present in a weight ratio A:B in a range of 1000:1 to 1:1000.

**3.** An active compound combination according to claim 2 wherein the compounds (A) and (B) are present in a weight ratio A:B in a range of 100:1 to 1:100.

**4.** Composition for controlling phytopathogenic harmful fungi, **characterized by** a content of at least one active compound combination according to any one of claims 1 to 3, in addition to extenders and/or surfactants.

**5.** Composition according to claim 4 comprising at least one further active ingredient selected from the group of the insecticides, attractants, sterilants, bactericides, acaricides, nematicides, fungicides, growth regulators, herbicides, fertilizers, safeners and semiochemicals.

**6.** Non-therapeutic method for controlling phytopathogenic harmful fungi, **characterized in that** an active compound combination according to any one of claims 1 to 3 or a composition according to claim 4 or 5 is applied to the phytopathogenic harmful fungi and/or their habitat.

**7.** Process for producing compositions for controlling phytopathogenic harmful fungi, **characterized in that** an active compound combination according to any one of claims 1 to 3 is mixed with extenders and/or surfactants.

**8.** Non-therapeutic use of an active compound combination according to any one of claims 1 to 3 or a composition according to claim 4 or 5 for the control of phytopathogenic harmful fungi.

**9.** Use of an active compound combination according to any one of claims 1 to 3 or a composition according to claim 4 or 5 for the treatment of transgenic plants.

**10.** Use of an active compound combination according to any one of claims 1 to 3 or a composition according to claim 4 or 5 for the treatment of seed and of seed of transgenic plants.

## Patentansprüche

1. Wirkstoffkombination, umfassend

   (A) N-(5-Chlor-2-isopropylbenzyl)-N-cyclopropyl-3-(difluormethyl)-5-fluor-1-methyl-1H-pyrazol-4-carbonsäureamid und/oder ein agrochemisch unbedenkliches Salz davon
   und
   (B) mindestens eine weitere fungizide Verbindung B, bestehend aus 2-[4-(4-Chlorphenoxy)-2-(trifluormethyl)phenyl]-3-methyl-1-(1H-1,2,4-triazol-1-yl)butan-2-ol.

2. Wirkstoffkombination nach Anspruch 1, wobei die Verbindungen (A) und (B) in einem Gewichtsverhältnis A:B im Bereich von 1000:1 bis 1:1000 vorliegen.

3. Wirkstoffkombination nach Anspruch 2, wobei die Verbindungen (A) und (B) in einem Gewichtsverhältnis A:B im Bereich von 100:1 bis 1:100 vorliegen.

4. Zusammensetzung zur Bekämpfung phytopathogener Schadpilze, **dadurch gekennzeichnet, dass** sie mindestens eine Wirkstoffkombination nach einem der Ansprüche 1 bis 3 umfasst, zusätzlich zu Streckmitteln und/oder Tensiden.

5. Zusammensetzung nach Anspruch 4, umfassend mindestens einen weiteren Wirkstoff ausgewählt aus der Gruppe der Insektizide, Lockstoffe, Sterilantien, Bakterizide, Akarizide, Nematizide, Fungizide, Wachstumsregulatoren, Herbizide, Düngemittel, Safener und Semiochemicals.

6. Nichttherapeutisches Verfahren zur Bekämpfung phytopathogener Schadpilze, **dadurch gekennzeichnet, dass** man eine Wirkstoffkombination nach einem der Ansprüche 1 bis 3 oder eine Zusammensetzung nach Anspruch 4 oder 5 auf die phytopathogenen Schadpilze und/oder ihren Lebensraum ausbringt.

7. Verfahren zur Herstellung von Zusammensetzungen zur Bekämpfung phytopathogener Schadpilze, **dadurch gekennzeichnet, dass** man eine Wirkstoffkombination nach einem der Ansprüche 1 bis 3 mit Streckmitteln und/oder Tensiden mischt.

8. Nichttherapeutische Verwendung einer Wirkstoffkombination nach einem der Ansprüche 1 bis 3 oder eine Zusammensetzung nach Anspruch 4 oder 5 zur Bekämpfung phytopathogener Schadpilze.

9. Verwendung einer Wirkstoffkombination nach einem der Ansprüche 1 bis 3 oder einer Zusammensetzung nach Anspruch 4 oder 5 zur Behandlung transgener Pflanzen.

10. Verwendung einer Wirkstoffkombination nach einem der Ansprüche 1 bis 3 oder einer Zusammensetzung nach Anspruch 4 oder 5 zur Behandlung von Saatgut und von Saatgut transgener Pflanzen.

## Revendications

1. Combinaison de composés actifs comprenant

   (A) au moins le N-(5-chloro-2-isopropylbenzyl)-N-cyclopropyl-3-(difluorométhyl)-5-fluoro-1-méthyl-1H-pyrazole-4-carboxamide ou un sel acceptable sur le plan agrochimique correspondant,
   et
   (B) au moins un composé B fongicide actif supplémentaire constitué du 2-[4-(4-chlorophénoxy)-2-(trifluorométhyl)phényl]-3-méthyl-1-(1H-1,2,4-triazol-1-yl)butan-2-ol.

2. Combinaison de composés actifs selon la revendication 1, les composés (A) et (B) étant présents en un rapport pondéral A:B dans une plage de 1 000:1 à 1:1 000.

3. Combinaison de composés actifs selon la revendication 2, les composés (A) et (B) étant présents en un rapport pondéral A:B dans une plage de 100:1 à 1:100.

4. Composition pour la lutte contre des champignons nuisibles phytopathogènes, **caractérisée par le fait qu'**elle

contient au moins une combinaison de composés actifs selon l'une quelconque des revendications 1 à 3, en plus d'extenseurs et/ou de tensioactifs.

**5.** Composition selon la revendication 4 comprenant au moins un ingrédient actif supplémentaire choisi dans le groupe des insecticides, des attracteurs, des stérilisants, des bactéricides, des acaricides, des nématicides, des fongicides, des régulateurs de croissance, des herbicides, des engrais, des phytoprotecteurs et des substances sémiochimiques.

**6.** Méthode non thérapeutique pour la lutte contre des champignons nuisibles phytopathogènes, **caractérisée en ce qu'**une combinaison de composés actifs selon l'une quelconque des revendications 1 à 3 ou une composition selon la revendication 4 ou 5 est appliquée aux champignons nuisibles phytopathogènes et/ou à leur habitat.

**7.** Procédé pour la production de compositions pour la lutte contre des champignons nuisibles phytopathogènes, **caractérisé en ce qu'**une combinaison de composés actifs selon l'une quelconque des revendications 1 à 3 est mélangée avec des extenseurs et/ou des tensioactifs.

**8.** Utilisation non thérapeutique d'une combinaison de composés actifs selon l'une quelconque des revendications 1 à 3 ou d'une composition selon la revendication 4 ou 5 pour la lutte contre des champignons nuisibles phytopathogènes.

**9.** Utilisation d'une combinaison de composés actifs selon l'une quelconque des revendications 1 à 3 ou d'une composition selon la revendication 4 ou 5 pour le traitement de végétaux transgéniques.

**10.** Utilisation d'une combinaison de composés actifs selon l'une quelconque des revendications 1 à 3 ou d'une composition selon la revendication 4 ou 5 pour le traitement de semences et de semences de végétaux transgéniques.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007087906 A
- WO 2009016220 A
- WO 2010130767 A
- WO 2012143125 A
- WO 2015055707 A
- WO 2013007767 A
- WO 2014108286 A
- WO 2016005211 A
- WO 2016008740 A
- WO 2015197393 A
- WO 2014095994 A
- WO 2014095932 A
- US 4272417 A
- US 4245432 A
- US 4808430 A
- US 5876739 A
- US 20030176428 A1
- WO 2002080675 A1
- WO 2002028186 A2
- WO 2009140769 A
- WO 2013092224 A
- WO 2014202421 A


### Non-patent literature cited in the description


- Chemie der Pflanzenschutz- and Schäd-lingsbekampfungsmittel. **R. WEGLER.** Chemistry of Crop Protection Agents and Pesticides. Springer Verlag, 1970, vol. 2, 401-412
- *J. Med. Chem.,* 2012, vol. 55 (1), 169-196
- *Bioorg. Med. Chem.,* 2006, vol. 14, 8506-8518
- **COLBY, S.R.** Calculating Synergistic and Antagonistic Responses of Herbicide Combinations. *Weeds,* 1967, vol. 15, 20-22
- Isoboles, a graphic representation of synergism in pesticides. *Neth. J. Plant Path.,* 1964, vol. 70, 73-80